# EUROPÄISCHE PATENTANMELDUNG

(11) **EP 1 221 405 A2**
(43) Veröffentlichungstag der Anmeldung: **10.07.2002**
(21) Anmeldenummer: 02000350.5
(22) Anmeldetag: 04.01.2002
(51) Int. Cl.: B62H 3/02

(54) **Fahrradständer**

(30) Priorität: 04.01.2001 DE 10100077
(71) Anmelder: Birkelbach, Guido, 6341 Ebbs (AT); Klingler, Norbert, 6311 Oberau 224 (AT)
(72) Erfinder: Die Erfindernennung liegt noch nicht vor
(74) Vertreter: Wiese, Gerhard

(57) **Zusammenfassung**

Die Erfindung betrifft einen Fahrradständer mit einem ortsfest angeordneten, von einem Ständerrohr (3) gebildeten Gestell, mit wenigstens einem schwenkbar am Gestell angeordneten Schließteil (12, 13) und mit einem Schloß zur Arretierung des Schließteils (12,13) gegenüber dem Gestell.
Gegenüber dem bekannten Stand der Technik zeichnet sich die Erfindung dadurch aus, dass das Schließteil (12, 13) unmittelbar am Ständerrohr (3) bewegbar angeordnet ist und in Schließstellung mit einer fest am Ständerrohr (3) angeordneten Halterung (5) im Eingriff steht.

## Beschreibung

Die Erfindung betrifft einen Fahrradständer gemäß dem Oberbegriff des Patentanspruchs 1.

Ein derartiger Fahrradständer ist aus der DE 93 11 668 U1 bekannt. Bei diesem ist das Gestell als vertikale Säule ausgebildet, an der zwei horizontal weit ausladende Hebelarme angeordnet sind, die an ihren Enden jeweils mit einer verschließbaren Halterung zur Aufnahme eines Rahmenteils eines Fahrrads versehen sind. Die ausladenden Hebelarme sind zum einen teuer, erhöhen zum anderen den Platzbedarf des Fahrradständers und bieten darüber hinaus reichlich Angriffsfläche für ein schweres Werkzeug, mit dem der gesamte Hebelarm abgeschlagen oder abgebrochen werden kann, so dass das daran befestigte Fahrrad mitsamt dem abgetrennten Teil des Hebelarms entwendbar ist.

Bei einem aus der US 5,244,101 A bekannten Fahrradständer ist ein kastenförmiges Gestell vorgesehen, an dem mehrere Öffnungen zum Einführen und Befestigen von Schließteilen vorgesehen sind. Als Schließteil ist beispielsweise ein Bügel oder ein mit Schlaufen versehenes Kabel vorgesehen, welches mit einem handelsüblichen Vorhangschloß verschließbar ist. Zum Versperren des mit einer aufschwenkbaren Tür versehenen Kastens ist dort auch ein Zylinderschloß vorgesehen. Nachteilig bei einem derartigen Fahrradständer ist, dass die Schließteile mittels eines Bolzenschneiders in einfacher Weise durchtrennbar sind, so dass die an einem derartigen Fahrradständer befestigten Fahrräder nicht zuverlässig vor Diebstahl geschützt sind.

Der vorliegenden Erfindung liegt die Aufgabe zugrunde, einen Fahrradständer der eingangs genannten Art zu schaffen, der stabil und kompakt ausgebildet ist und mittels dem eine zuverlässige Aufbewahrung von Fahrrädern möglich ist, ohne dass der Benutzer in aufwendiger Weise schwere Schließteile mit sich herumführen muß.

Diese Aufgabe wird durch die in Patentanspruch 1 angegebenen Mittel gelöst. Vorteilhafte Ausgestaltungen der Erfindung sind den Unteransprüchen zu entnehmen.

Die Erfindung sieht vor, dass das Schließteil unmittelbar am Ständerrohr bewegbar angeordnet ist und in Schließstellung mit einer fest am Ständerrohr angeordneten Halterung im Eingriff steht. Die unmittelbare Anordnung des Schließteils vermeidet nicht aufbruchsichere Zwischenelemente wie Scharniere, Hebel oder dergleichen, wie diese beispielsweise bei einem Fahrradständer gemäß der WO 83/01646 oder der DE 91 16 355 U1 zu finden sind. Beim Erfindungsgegenstand sind alle für eine Bewegung des Schließteils erforderlichen Elemente verdeckt im Inneren des Ständerrohrs angeordnet und bieten somit keinerlei Angriffspunkt für ein Werkzeug zum Aufbrechen. Durch eine bevorzugt kombinierte Dreh- und Schubbewegung des Schließteils kann dieses in einen unverdrehbaren formschlüssigen Eingriff mit einer als Halteklaue ausgebildeten Halterung gebracht werden. Der Abstand des Schließteils und der Halterung bzw. Halteklaue von der Achse des Ständerrohrs ist so gering, dass gerade ein Rahmenrohr eines Fahrrades von diesen umschlossen werden kann. Aufgrund der massiven Ausbildung des Schließteils und der Halteklaue und deren bevorzugter Herstellung aus Edelstahl oder gehärtetem Stahl, sowie aufgrund des geringen Abstandes von der Achse des Ständerrohrs und somit des geringen Hebelarms für den Angriff eines Werkzeugs läßt sich der erfindungsgemäße Fahrradständer mit herkömmlichen Werkzeugen weder aufbrechen noch abbrechen.

Eine besonders einfache Ausführungsform sieht vor, dass das Gestell von einem zylindrischen Ständerrohr gebildet wird. An einem solchen Ständerrohr kann das Schließteil als ebenfalls zylindrischer Schließkopf mit einem daran befestigten horizontalen Schließbolzen in einfacher Weise drehbar und axial verschiebbar gelagert sein.

Vorzugsweise sind zwei voneinander vertikal beabstandete Halteklauen vorgesehen, die zwei Rahmenteile aufnehmen, wobei die obere Halteklaue mit dem Schtießteil zusammenwirkt. Da Halteklauen und Schließteil als massive Edelstahlteile ausgebildet sind, können diese mit einem herkömmlichen Bolzenschneider nicht durchtrennt werden. Die Halteklauen können auf einer gemeinsamen, am Ständerrohr bevorzugt durch Schweißen befestigten Trägerplatte angeordnet sein.

Das Schließteil wird bevorzugt von einem horizontalen zylindrischen Schließbolzen gebildet. Dieser legt sich in Schließposition bevorzugt in eine gabelförmige Aufnahme an der oberen Halteklaue ein, um eine Verdrehung des Schließteils gegenüber dem Ständerrohr zu verhindern. Umgekehrt kann auch die Halteklaue ein nach oben weisendes schneidenförmiges Eingriffteil aufweisen, das in eine nach unten weisende Nut des Schließbolzens eingreift.

Für eine Verbindung des Schließteils mit dem Gestell ist vorzugsweise ein verdeckt im Inneren angeordneter Kulissenstein vorgesehen, der in eine Nut am Schießteil eingreift. Alternativ dazu kann jedoch ein von außen durch eine Wand des Gestells eingebrachter und fest mit diesem verbundener Bolzen in eine Nut an einem Schaft des Schließteils eingreifen.

Sofern die Nut am Schließteil einen kurvenartigen ansteigenden Verlauf aufweist, wird eine zwangsweise Führung des Schließteils in axialer Richtung bei einer Drehbewegung gewährleistet, so dass das Schließteil bei einer Drehung zwangsgesteuert einen axialen Hub ausführt, der es in oder außer formschlüssigen Eingriff mit der Halterung bzw. Halteklaue bringt.

Vorzugsweise sind zur Vermeidung von Beschädigungen am Rahmen des Fahrrades die mit diesem in Berührung geratenen Teile, das heißt, das Schließteil und die inneren Seiten der Halteklauen jeweils mit einer Schutzabdeckung beispielsweise aus Kunststoff überzogen.

Der Abstand der Halteklauen ist so voneinander gewählt, dass im Bereich des Hinterrades das untere Rahmenrohr und ein schräges hinteres Rahmenrohr von allen am Markt befindlichen Fahrrädern von den beiden beabstandeten Halteklauen erfaßt werden können. Dabei ist der Abstand der unteren Halteklaue vom Boden so gewählt, dass auch das im Durchmesser größte Hinterrad eines marktüblichen Fahrrads zwischen Boden und unterer Halteklaue aufgenommen werden kann.

An der Unterseite des Gestells ist bevorzugt eine Befestigungsvorrichtung zur Befestigung des Gestells an einem ortsfesten Fundament vorgesehen. Diese kann beispielsweise aus einer Basisplatte oder entsprechenden Ankern bestehen, die in ein Fundament einbetoniert werden können. Besonders bevorzugt ist eine Ausführung, bei der zwischen dem Gestell und der Basisplatte bzw. dem Fundament eine allseitig schwingfähige und bevorzugt auch drehbare Lagerung vorgesehen ist. Dadurch ist gewährleistet, dass das Gestell auch bei großer Kraft- bzw. Moment- Einleitung mit einem langen Hebelarm nicht durch Biegung oder Torsion von der Basisplatte oder dem Fundament abgetrennt werden kann, sondern sich bevorzugt federnd wegbiegt oder wegdreht.

Als Schloß wird bevorzugt ein handelsüblicher Schließzylinder, beispielsweise nach DIN 18252/V 18254, verwendet wird, der bei in Schließstellung befindlichen Schließteil in eine Aufnahme an Gestell und Schließteil einführbar ist und diese beiden Bauteile fest miteinander verriegelt. Der Benutzer muß also lediglich einen kleinen Schließzylinder mit einem Schlüssel mit sich führen und kann an den ortsfest vorbereiteten Fahrradständern den Rahmen seines Fahrrades durch Bewegen des Schließteils fest mit dem ortsfesten Gestell verbinden und anschließend das Schließteil durch Einführen und Verriegeln des Schließzylinders arretieren. Derartige Schließzylinder weisen eine außerordentliche hohe Diebstahlsicherheit auf, da sie auch bei Haustüren von Gebäuden Verwendung finden und bei einer bündigen Anordnung mit dem zu sichemden Teil auch von Profis nicht leicht zu knacken sind.

Nachfolgend ist ein Ausführungsbeispiel der Erfindung anhand der Zeichnung beschrieben. Es zeigt:
- Fig. 1: eine Seitenansicht eines Fahrradständers mit einem darin aufgenommenen Fahrrad,
- Fig. 2: eine vergrößerte Seitenansicht des Fahrradständers im Leerzustand,
- Fig. 3: eine teilweise Vorderansicht des Fahrradständers gemäß Fig. 2,
- Fig. 4: eine vergrößerte Seitenansicht des Fahrradständers gemäß Fig.1
- Fig. 5: eine vergrößerte Seitenansicht des Schließkopfes,
- Fig. 6: eine vergrößerte Vorderansicht des Schließkopfes,
- Fig. 7: einen Längsschnitt durch den eingebauten Schließkopf,
- Fig. 8: einen Längsschnitt durch den eingebauten Schließkopf in einer gegenüber der Fig. 7 um 90 ° versetzten Ebene,
- Fig. 9: eine perspektivische Ansicht eines gesamten Fahrradständers mit geschlossenem Schließteil,
- Fig. 10: eine vergrößerte Darstellung des Schließbolzens gemäß der Einzelheit X in Fig. 9,
- Fig. 11: eine Explosionsdarstellung des Fahrradständers mit einer schwenkbaren Bodenlagerung,
- Fig. 12: eine starre Befestigung des Ständerrohrs am Fundament mittels eines Schwerlastankers,
- Fig. 13: eine verschwenkbare Befestigung des Ständerrohrs an einer Grundplatte,
- Fig. 14: eine Draufsicht zur Fig. 13,
- Fig. 15: eine Befestigung mehrerer Fahrradständer an einer gemeinsamen Grundplatte, und
- Fig. 16: eine Draufsicht zur Fig. 15.

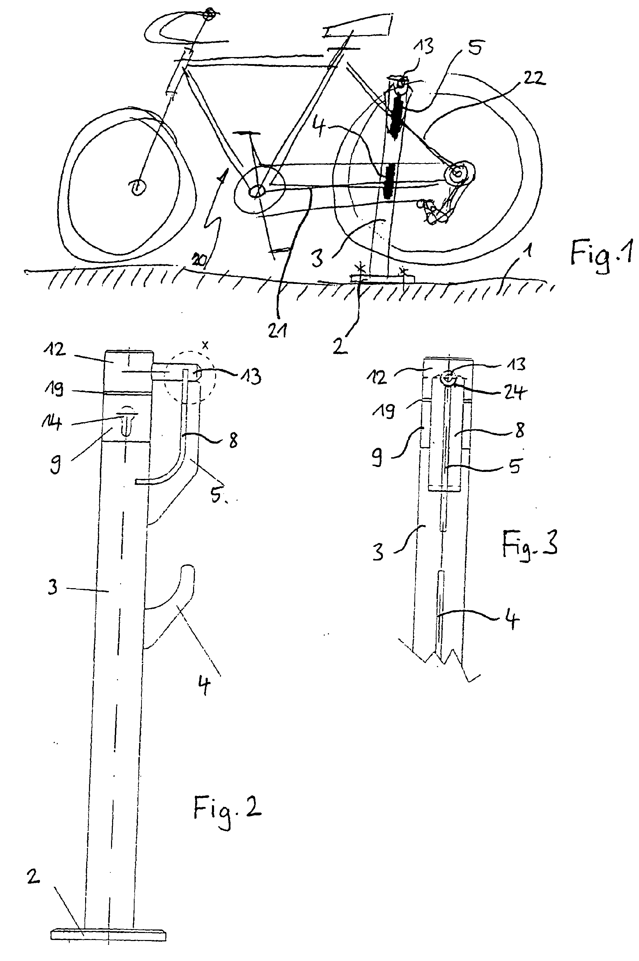

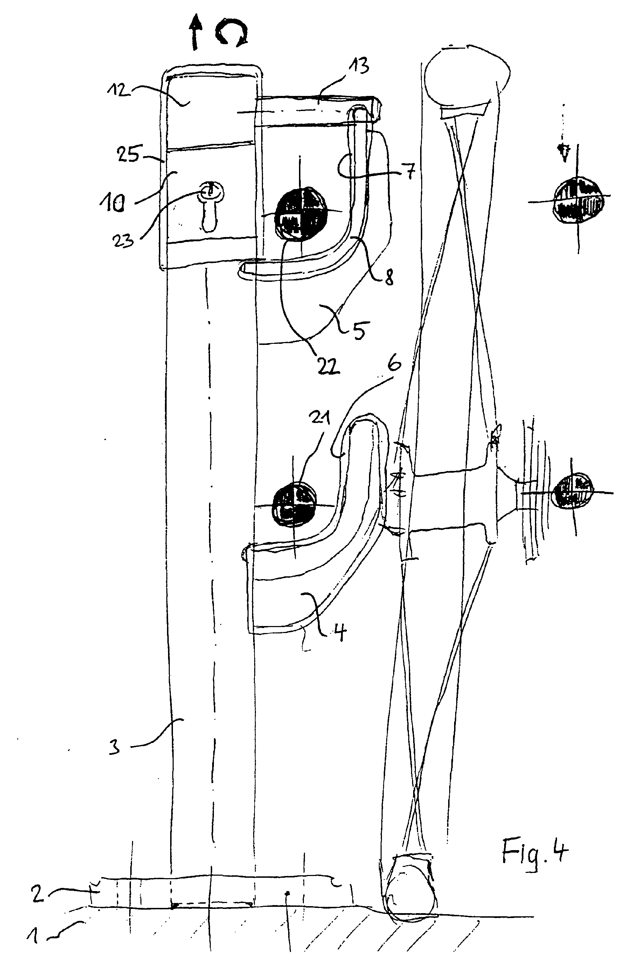

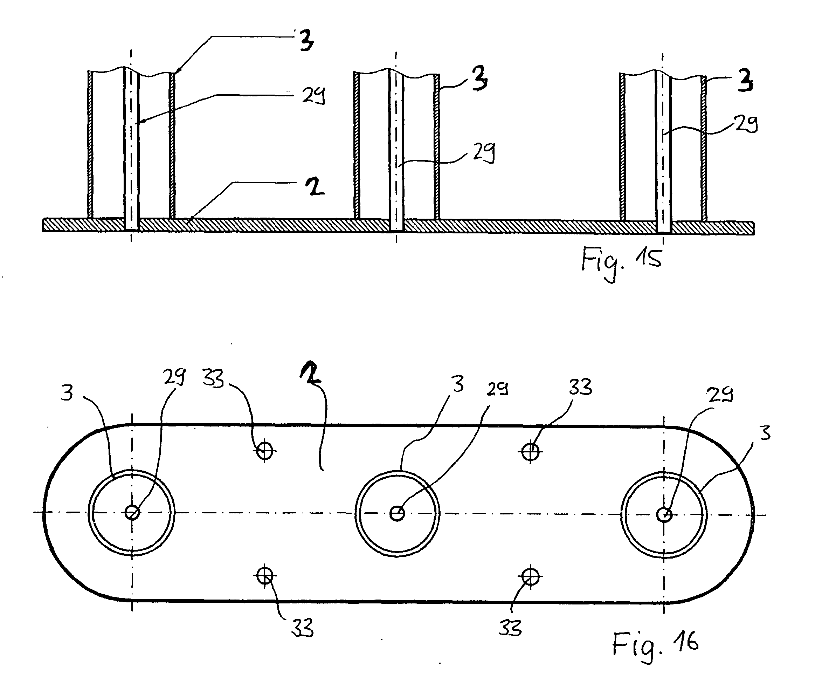

In Fig. 1 ist ein Fahrrad 20 gezeigt, dass an einem erfindungsgemäßen Fahrradständer befestigt ist. Der Fahrradständer besteht aus einem als Ständerrohr 3 ausgebildeten Gestell, an dessen Unterseite eine Grundplatte 2 zur Befestigung an einem ortsfesten Fundament 1 angeordnet ist. Die Befestigung kann entweder mittels Schrauben mit verdeckten Schraubenköpfen oder durch Einbetonieren der Grundplatte 2 oder entsprechend geformter Anker erfolgen. Einige Befestigungsmöglichkeiten sind in den Fign. 12 bis 16 dargestellt.

Am Ständerrohr 3 ist eine untere Halteklaue 4 und vertikal davon beabstandet eine obere Halteklaue 5 vorgesehen. Beide Halteklauen 4 bzw. 5 bilden mit dem Ständerrohr 3 vertikal nach oben offene Aufnahmeräume. Die Halteklauen 4 und 5 und gegebenenfalls auch der Schließbolzen 13 sind bevorzugt mit einer Schutzabdeckung 6 bzw. 7 versehen, die beispielsweise als eine aufgespritzte Kunststoffschicht oder eine aufgeklebte Kunststoffkappe ausgebildet sein kann und das zu sichernde Fahrrad vor dem Verkratzen schützt. Nach dem Einhängen des Fahrrades 20 in den Fahrradständer umgreift die untere Halteklaue 4 ein unteres Rahmenrohr 21, das sich von der Hinterachse zum Tretlager des Fahrrades 20 erstreckt. Die obere Halteklaue 5 umgreift ein schräges hinteres Rahmenrohr 22, das sich von der Hinterachse zur Aufnahme für das Sattelrohr nach oben erstreckt. Da diese beiden Rahmenrohre 21 bzw. 22 unter einem Winkel zueinander verlaufen, kann bei einem bestimmten vertikalen Abstand der unteren Halteklaue 4 von der oberen Halteklaue 5 jedes handelsübliche Fahrrad, vom Kinderrad bis zum großen Tourenrad, an einem derartigen Fahrradständer befestigt werden.

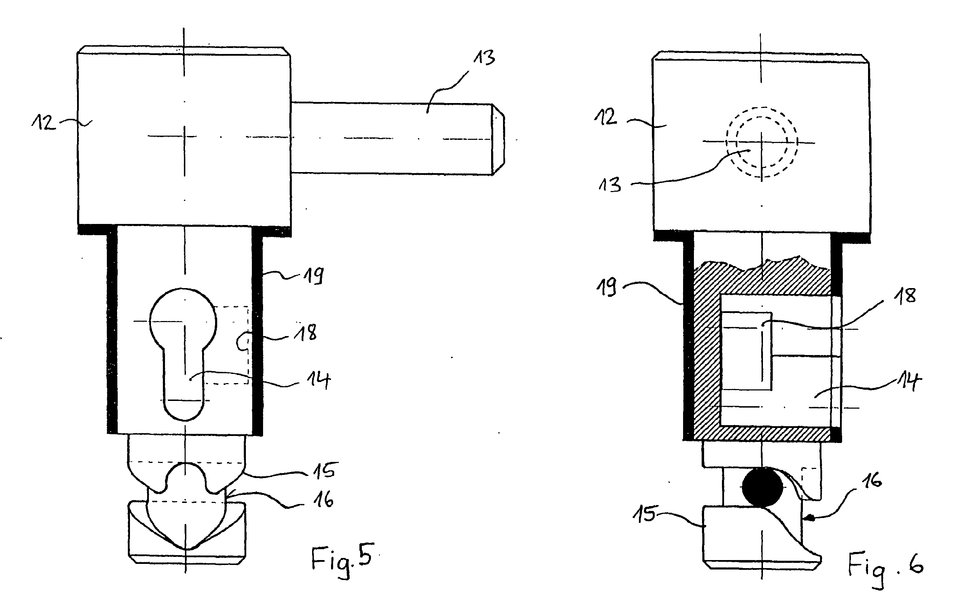

Wie in den Fign. 2 bis 11 im Detail gezeigt, ist im oberen Teil des Ständerrohrs 3 ein als Schließkopf 12 ausgebildetes Schließteil gelagert. Der Schließkopf 12 ist wie das Ständerrohr 3 zylindrisch ausgebildet und greift mit einem an seiner Unterseite verjüngt ausgebildeten Schaft in eine Hülse 10 ein, die mit dem oberen Teil des Ständerrohrs 3 fest verbunden ist. Am oberen dickeren Teil des Schließkopfes 12 ist ein sich horizontal nach außen erstreckender Schließbolzen 13 befestigt. Dieser weist einen Durchmesser von etwa 19 mm oder mehr auf und besteht bevorzugt aus hochfestem Edelstahl, so dass er mittels eines herkömmlichen Bolzenschneiders nicht mehr zu durchtrennen ist. Der Schließbolzen 13 kann auch aus gehärtetem Stahl hergestellt sein, so dass auch ein Aufsägen oder Flexen nur unter erheblichen Aufwand möglich ist.

Gleiches gilt für das Material der Halteklauen 4 und 5 sowie für ein optional dort angeschweißtes Aussteifungsblech 8, das die obere Halteklaue 5 zu einem im Querschnitt T-förmigen Profil ergänzt. An der Oberseite der oberen Halteklaue 5 ist an dieser und/oder am Aussteifungsblech 8 eine gabelförmige Aufnahme 24 vorgesehen, in welche sich der Schließbolzen 13 im geschlossenen Zustand zumindestens teilweise formschlüssig einlegt, so dass in der durch Schloß gesicherten Schließposition keine Verdrehung des Schließkopfes 12 möglich ist.

Der Schließkopf 12 weist in seinem mittleren verjüngten Schaftteil eine Aufnahme 14 für einen Schließzylinder 23 auf, die im hinteren Bereich in Form einer Riegelkammer 18 erweitert ist, in welche sich ein Riegelteil durch Drehen des Schlüssels am Schließzylinder 23 einlegt, so dass der Schließzylinder nach Entfernen des Schlüssels fest in der Aufnahme 14 gehalten wird. Der schaftförmige Mittelteil des Schließkopfes 12 ist von einer Lagerbuchse 19 umgeben, die als axiales und radiales Lager des Schließkopfes 12 gegenüber der Hülse 10 dient. Die Lagerbuchse 19 ist bevorzugt aus einem Kunststoff mit guten Gleiteigenschaften wie beispielsweise Polytetrafluorethylen (PTFE) ausgebildet. Die Lagerbuchse 19 ist im Bereich der Aufnahme 14 ausgespart.

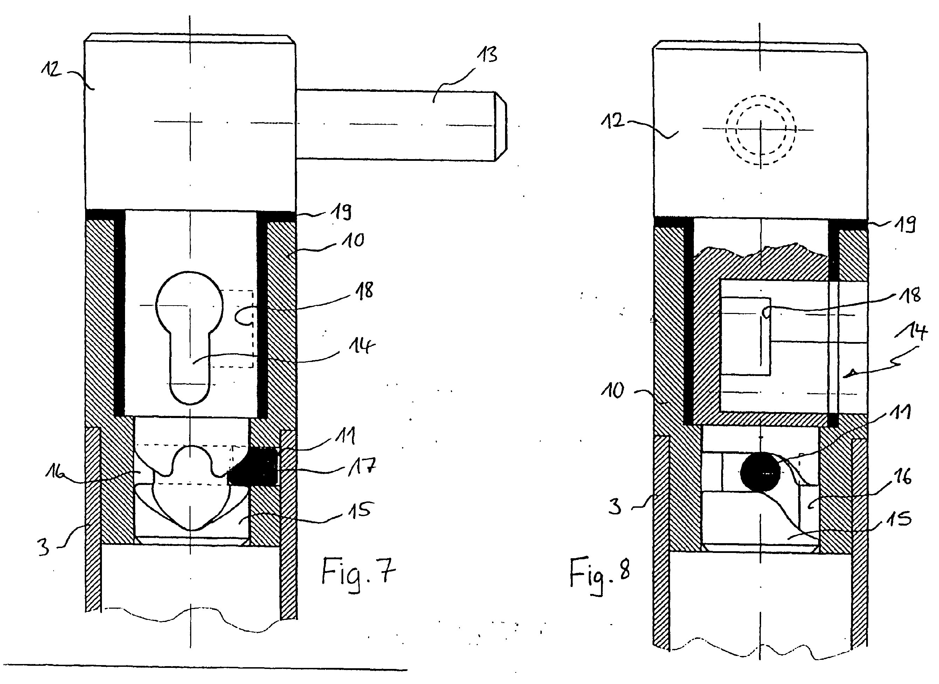

An das schaftförmige Mittelteil des Schließkopfes 12 schließt sich nach unten ein weiter verjüngter zylindrischer Teil als Schließkopflager 15 an, wobei in den Außenumfang dieses Schließkopflagers 15 eine Nut 16 mit einer ansteigenden kurvenförmigen Kontur eingearbeitet ist. Wie aus Fig. 7 ersichtlich, greift in diese Nut 16 ein Kulissenstein 17 ein, der mit seinem äußeren Ende in einer Nut 11 in der Hülse 10 gelagert ist. Die Hülse 10 ist mit dem Ständerrohr 3 fest verbunden. Die Verbindung kann beispielsweise durch Schweißen, Löten oder Pressen erfolgen. Alternativ zur Lagerung des Schließkopfes 12 an der Hülse 10 mittels des Kulissensteins 17 ist es auch möglich, den Kulissenstein 17 durch einen stummelförmigen Bolzen zu ersetzen, der eine obere Wand des Ständerrohrs 3 durchdringt und mit seinem inneren Ende in die Nut 16 des Schließkopfes 12 eingreift. Ein derartiger Bolzen kann in der Wand des Ständerrohrs 3 durch Einpressen, Schweißen oder Löten unlösbar befestigt sein.

Durch das Zusammenwirken eines derartigen Bolzens bzw. des Kulissensteins 17 mit der Nut 16, ist eine Verdrehung des Schließkopfes 12 gegenüber dem Ständerrohr 3 bzw. der Hülse 10 in beiden Richtungen möglich. Durch den kurvenförmigen Verlauf der Nut 16 wird dabei der Schließkopf 12 beim Verdrehen aus der Schließposition, bei der sich der Schließbolzen 13 in der gabelförmigen Aufnahme 24 der oberen Halteklaue 5 befindet, zwangsgeführt so weit angehoben, dass der Schließbolzen 13 aus der gabelförmigen Aufnahme 24 nach oben herausgehoben wird. Die Form der Aufnahme 14 ist, wie Fig. 8 zeigt, auch in die Außenwand der Hülse 10 eingebracht. Die beiden schlüssellochartigen Konturen der Aufnahme 14 am Schaft des Schließkopfes 12 und an der Hülse 10 befinden sich dann in überdeckender Lage, wenn sich der Schließbolzen 13 in seiner Schließposition in der gabelförmigen Aufnahme 24 befindet. In dieser Lage kann ein handelsüblicher Schließzylinder 23, beispielsweise nach DIN 18252/V 18254, den der Benutzer mit sich führt, in die Aufnahme 14 eingeschoben werden, wobei durch Umdrehen des Schlüssels ein Riegelteil am Schließzylinder 23 in die hinterschnittene Riegelkammer 18 eingreift, so dass nach Abziehen des Schlüssels der Schließzylinder 23 nicht mehr entfernbar ist. Der Schließzylinder 23 verriegelt in dieser Position den Schließkopf 12 gegenüber der Hülse 10 und somit gegenüber dem Ständerrohr 3, so dass der Rahmen des Fahrrades, das in die Halteklauen 4 bzw. 5 eingehängt ist, mittels des Eingriffs des Schließbolzens 13 mit der Halteklaue 5 massiv gehalten wird.

Vorteilhaft ist die Aufnahme für den Schließzylinder 23 am Ständerrohr 3 von einer Abdeckung 25 (siehe Fig. 4) abdeckbar und wird dadurch vor Verschmutzung und Vereisung geschützt. Die Abdeckung 25 ist drehbar am Gestell 3 gelagert und kann auch bei eingestecktem Schließzylinder 23 und abgezogenem Schlüssel über die Aufnahme 14 gedreht werden.

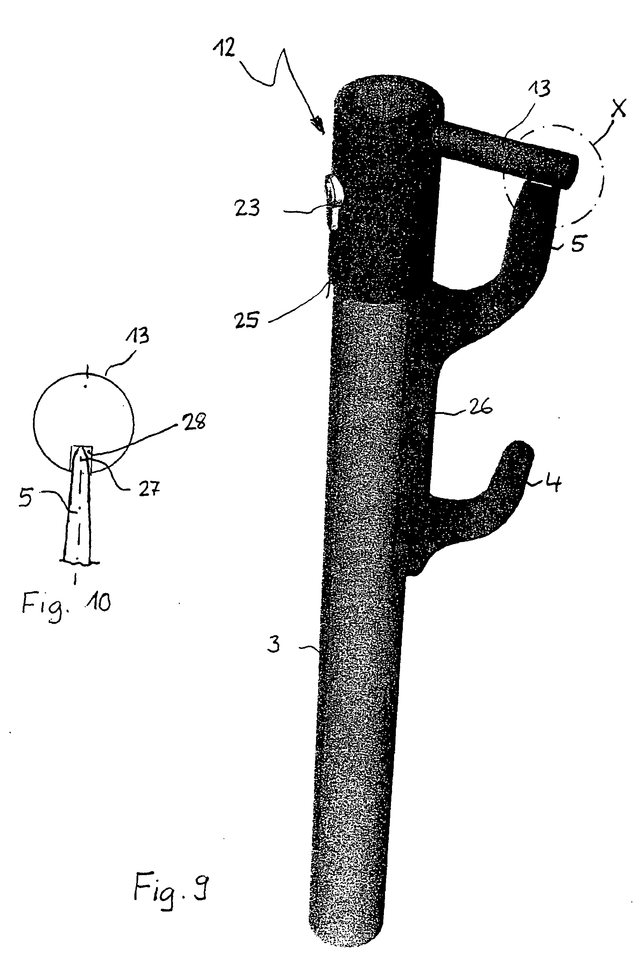

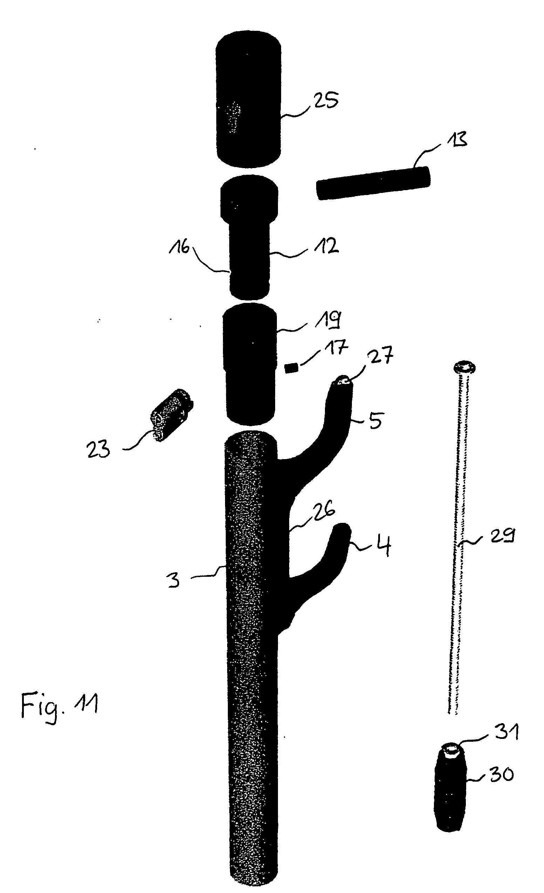

In den Fign. 9 und 10 ist eine alternative Ausgestaltung des Eingriffs des Schießbolzens 13 mit der oberen Halteklaue 5 dargestellt. Die Halteklaue 5 ist in diesem Falle selbst so massiv ausgebildet, dass sie kein zusätzliches Aussteifungsblech 8 benötigt. Der obere Teil der Halteklaue 5 ist hier mit einem schneidenförmigen Eingriffteil 27 versehen, das in der Schließposition in eine an der Unterseite des Schließbolzens 13 eingearbeitete Nut 28 eingreift. Ferner ist den Fign. 9 und 11 zu entnehmen, dass die obere Halteklaue 5 und die untere Halteklaue 4 an einer gemeinsamen stabilen Trägerplatte 26 ausgebildet sind, die ihrerseits an der Außenseite des Ständerrohrs 3 bevorzugt durch Schweißen unlösbar befestigt ist.

In Fig. 9 und 11 ist auch sehr gut erkennbar, dass der erfindungsgemäße Fahrradständer eine sehr kompakte, außen glattfächige Form aufweist, und dass alle für eine Bewegung des Schließteils (Schließkopf 12, Schließbolzen 13) erforderlichen Teile geschützt im Inneren des Ständerrohrs 3 angeordnet sind. Dadurch bietet sich keinerlei Angriffsfläche für ein Aufbruchswerkzeug.

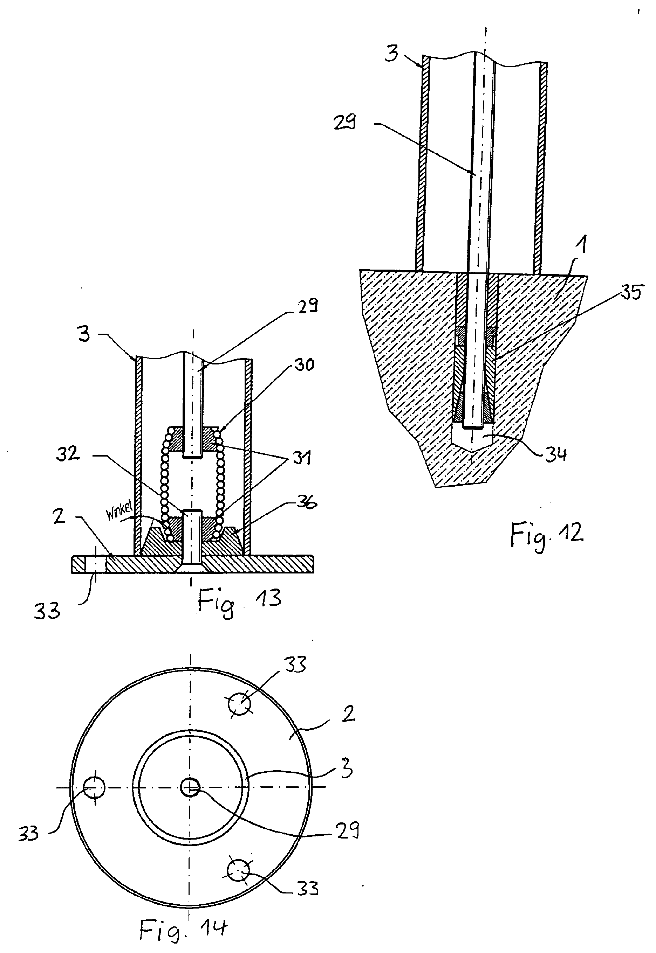

In den Fig. 11 und 13 ist ein weiteres vorteilhaftes Merkmal zur Verhinderung des Abschlagens, Abbrechens oder Abdrehens des gesamten Ständerrohrs 3, des Schließbolzens 13 oder der Halteklaue 5 dargestellt. Das Ständerrohr 3 ist in diesem Falle mit seiner Unterseite gegenüber der Grundplatte 2 (oder alternativ auch gegenüber dem Fundament 1) schwingend und vorzugsweise auch drehbar gelagert. Hierzu ist ein tonnenförmiges Federelement 30 vorgesehen, das mit seinen verengten oberen und unteren Wicklungen jeweils fest eine Mutter 31 umschließt. In die obere Mutter 31 ist eine Gewindestange 29 vom oberen Ende des Ständerrohrs 3 her eingeschraubt. Die Gewindestange 29 durchdringt ein Durchgangsloch einer nicht dargestellten, im oberen Teil des Ständerrohrs 3 quer angeordneten Platte. Der obere Schraubenkopf der Gewindestange 29 liegt dabei auf dieser Platte auf. In die untere Mutter 31 ist eine Befestigungsschraube 32 eingeschraubt, die die Grundplatte 2 von unten durchdringt. Die Befestigungsschraube 32 durchdringt auch ein auf der Grundplatte 2 angeordnetes Zentrierstück 36, das konisch nach oben zulaufende Außenwände aufweist, über welche das Ständerrohr 3 mit seiner Innenwandung exakt nach unten auf die Grundplatte 2 geführt und dort seitlich fixiert wird. Das Zentrierstück 36 weist im zentralen Bereich an seiner Oberseite eine kegelstumpfförmige Vertiefung auf, in welches das Federelement 30 und die untere Mutter 31 mit ihrem unteren Ende eintauchen. Das Federelement 30 wird nach Montage des Ständerrohrs 3 an die Grundplatte 2 mittels der Gewindestange 29 stark vorgespannt, so dass es bei einer starken Biegung oder Torsion des Ständerrohrs 3 dessen seitliches Wegkippen oder dessen Wegdrehen in einem begrenzten Umfang ermöglicht. Das Ständerrohr 3 wird dadurch sowohl vor Vandalismus mit großen Werkzeugen, wie Vorschlaghämmern oder in die Halteklauen eingefädelten langen Stangen oder Rohren, als auch gegen Beschädigung durch leichte Rangierunfälle von Kraftfahrzeugen geschützt. Die Grundplatte 3 wird über Bohrungen 33 und durch diese hindurchgreifende Befestigungsmittel mit einem Fundament 1 verbunden.

Alternativ zur federnden Befestigung ist, wie in Fig. 12 gezeigt, auch eine starre unmittelbare Befestigung des Ständerrohrs 3 mittels einer in diesem Fall entsprechend verlängerten Gewindestange 29 und einem Schwerlastanker 35 mit aufspreizenden Keilelementen in einer Bohrung 34 des Fundaments 1 möglich.

Wie den Fign. 15 und 16 zu entnehmen, können auch mehrere Fahrradständer auf einer gemeinsamen Grundplatte 2 befestigt werden. In diesem Beispiel greifen die Gewindestangen 29 mit ihren unteren Enden in Gewindebohrungen in der Grundplatte 2 ein. Statt dessen ist selbstverständlich auch hier eine federnde Lagerung gemäß Fig. 13 möglich, wobei dann wiederum Befestigungsschrauben 32, die Grundplatte 2 von unten durchdringen und in die unteren Muttern 31 eingeschraubt sind.

Es ist auch eine federnde Befestigung unmittelbar am Fundament 1 möglich, wobei dann der Schwerlastanker 35 oder ein einbetonierter Anker mit einem Gewindestück in die untere Mutter 31 eingeschraubt wird.

Der vorstehend beschriebene Fahrradständer gewährleistet eine extrem diebstahlsichere Aufbewahrung von Fahrrädern, wobei das bevorzugt vom Benutzer mitzuführende Schloß sich auf einen handelsüblichen Schließzylinder beschränkt, der klein und leicht und darüber hinaus kostengünstig ist. Der Fahrradständer eignet sich zur ortsfesten Anbringung vor öffentlichen oder privaten Gebäuden aller Art, wie Kindergärten, Schulen, Behörden, Bahnhöfen, Postämtern, Banken, Wohn- und Bürogebäuden, Fahrradgeschäften (dort nicht nur für die Kunden, sondern auch zur Sicherung der eigenen zur Schau gestellten hochwertigen Fahrräder) oder dergleichen oder auch auf zentralen Plätzen, an welchen ein Bedarf zur diebstahlsicheren Unterbringung von Fahrrädern besteht.

Dadurch, dass der Benutzer seinen Schließzylinder in täglichem Wechsel an verschiedenen Fahrradständern benutzt, nutzt es einem potentiellen Fahrraddieb auch wenig, für das Herstellen eines Nachschlüssels einen Abdruck vom Schloß anzufertigen, da derselbe Schließzylinder am nächsten Tag vermutlich in einem anderen Fahrradständer stecken wird.

### Bezugszeichenliste

- 1: Fundament
- 2: Grundplatte
- 3: Ständerrohr
- 4: Halteklaue (untere)
- 5: Halteklaue (obere)
- 6: Schutzabdeckung (an 4)
- 7: Schutzabdeckung (an 5)
- 8: Aussteifungsblech (an 5)
- 10: Hülse
- 11: Nut (in 10)
- 12: Schließkopf
- 13: Schließbolzen
- 14: Aufnahme (für Schließzylinder)
- 15: Schließkopflager
- 16: Nut (an 15)
- 17: Kulissenstein
- 18: Riegelkammer (an 14)
- 19: Lagerbuchse
- 20: Fahrrad
- 21: unteres Rahmenrohr
- 22: schräges hinteres Rahmenrohr
- 23: Schließzylinder
- 24: (gabelförmige) Aufnahme (an 5)
- 25: Abdeckung
- 26: Trägerplatte (für 4 und 5)
- 27: Eingriffteil (an 5)
- 28: Nut (an 13)
- 29: Gewindestange
- 30: Federelement
- 31: Mutter
- 32: Befestigungsschraube
- 33: Bohrung
- 34: Bohrung
- 35: Schwerlastanker
- 36: Zentrierstück

## Patentansprüche

1. Fahrradständer mit einem ortsfest angeordneten, von einem Ständerrohr (3) gebildeten Gestell, mit wenigstens einem schwenkbar am Gestell angeordneten Schließteil (12, 13) und mit einem Schloß zur Arretierung des Schließteils (12, 13) gegenüber dem Gestell,
**dadurch gekennzeichnet, dass** das Schließteil (12, 13) unmittelbar am Ständerrohr (3) bewegbar angeordnet ist und in Schließstellung mit einer fest am Ständerrohr (3) angeordneten Halterung (5) im Eingriff steht.

2. Fahrradständer nach Anspruch 1, **dadurch gekennzeichnet, dass** das Schließteil von einem am Ständerrohr (3) drehbar und axial verschiebbar gelagerten Schließkopf (12) und einem an diesem befestigten Schließbolzen (13) gebildet wird.

3. Fahrradständer nach einem der vorhergehenden Ansprüche, **dadurch gekennzeichnet, dass** die Halterung als Halteklaue (5) ausgebildet ist, die in Verbindung mit dem Schließteil (12, 13) ein Rahmenteil (21, 22) eines Fahrrads (20) umgibt.

4. Fahrradständer nach Anspruch 3, **dadurch gekennzeichnet, dass** am Ständerrohr (3) zwei vertikal voneinander beabstandete Halteklauen (4, 5) zur Aufnahme von zwei Rahmenteilen (21, 22) angeordnet sind, von denen die obere Halteklaue (5) mit dem Schließteil (12, 13) zusammenwirkt.

5. Fahrradständer nach einem der vorhergehenden Ansprüche, **dadurch gekennzeichnet, dass** das Schießteil (12) mit dem Ständerrohr (3) mittels eines in eine Nut (16) am Schließteil (12) eingreifenden Kulissensteins (17) verbunden ist.

6. Fahrradständer nach Anspruch 5, **dadurch gekennzeichnet, dass** die Nut (16) am Schießteil (12) einen kurvenartig ansteigenden Verlauf aufweist.

7. Fahrradständer nach einem der vorhergehenden Ansprüche, **dadurch gekennzeichnet, dass** die mit dem Rahmen des Fahrrads (20) in Berührung geratenden Teile (4, 5, 8, 13) mittels einer Schutzabdeckung (6, 7) überzogen sind.

8. Fahrradständer nach einem der vorhergehenden Ansprüche 4 bis 7, **dadurch gekennzeichnet, dass** der Abstand der Halteklauen (4, 5) voneinander so gewählt ist, dass das untere Rahmenrohr (21) eines jeden am Markt befindlichen Fahrrads (20) von der unteren Halteklaue (4) umgeben wird, während die obere Halteklaue (5) ein schräges hinteres Rahmenrohr (22) desselben umgibt.

9. Fahrradständer nach einem der vorhergehenden Ansprüche 4 bis 8, **dadurch gekennzeichnet, dass** der Abstand der unteren Halteklaue (4) vom Boden so gewählt ist, dass auch das im Durchmesser größte Hinterrad eines marktüblichen Fahrrads zwischen Boden und unterer Halteklaue (4) aufgenommen werden kann,

10. Fahrradständer nach einem der vorhergehenden Ansprüche, **dadurch gekennzeichnet, dass** zumindestens das Schließteil (12, 13) und die Halteklauen (4, 5) aus hochfestem Edelstahl oder gehärtetem Stahl bestehen.

11. Fahrradständer nach einem der vorhergehenden Ansprüche, **dadurch gekennzeichnet, dass** an der Unterseite des Gestells (3) eine Befestigungsvorrichtung (2) zur Befestigung an einem ortsfesten Fundament (1) angeordnet ist.

12. Fahrradständer nach Anspruch 11, **dadurch gekennzeichnet, dass** zwischen der Unterseite des Gestells (3) und der Befestigungsvorrichtung (2) zur Befestigung an einem ortsfesten Fundament (1) eine allseitig schwingfähige Lagerung angeordnet ist.

13. Fahrradständer nach einem der vorhergehenden Ansprüche, **dadurch gekennzeichnet, dass** am Ständerrohr (3) eine Aufnahme (14) für einen als Schloß verwendeten, entnehmbaren handelsüblichen Schließzylinder (23) vorgesehen ist.

14. Fahrradständer nach Anspruch 13, **dadurch gekennzeichnet, dass** die Aufnahme (14) für den Schließzylinder (23) am Ständerrohr (3) von einer Abdeckung (25) abdeckbar ist.
